# EUROPEAN PATENT APPLICATION

(11) **EP 1 168 215 A2**
(43) Date of publication of application: **02.01.2002**
(21) Application number: 01202394.1
(22) Date of filing: 20.06.2001
(51) Int. Cl.: G06F 17/60

(54) **Interactive system and method for making commercial transactions**

(30) Priority: 23.06.2000 IT MI001420
(71) Applicant: Vrway Patent b.v., 1017 PP Amsterdam (NL)
(72) Inventor: Gianola, Giovanni, 6962 Albonago (CH)
(74) Representative: Zanardo, Giovanni

(57) **Abstract**

An interactive system and method for making commercial transactions, according to which it is envisaged that the user makes a virtual journey through the streets of a chosen location and then visits stores of that location so as to be able to examine closely and from innumerable points of view the products or services on sale by simply pointing the mouse (12) on them and selecting them, it being moreover possible to drag the said desired products or services to the counter of the shop, store, commercial centre, hotel or the like, and finally to activate one or more chat lines (23, 24) with other visitors to the establishment or with the dealer to obtain further information on the characteristics of the product or service, on the price, on the form of payment and delivery.

## Description

The present invention refers to an interactive system and method for making commercial transactions and, in particular to a system and a method for buying products on line on the Internet network.

In a very short time, the Internet network has become a new, extremely powerful, and instantaneous way for making on-line transactions of any type, among which commercial transactions (eCommerce).

At present there exist numerous network services that enable consumers to access, via their own computer terminal, the various catalogues comprising a series of products of various kinds, among which they can choose the ones to order on line.

Subsequently, after paying the corresponding charge, usually via credit card and directly via the computer terminal (for this purpose, identification codes and passwords of the caller are, for example, used for reasons of security), the goods purchased are shipped, by "return mail" or by courier to the address of the purchaser.

The services of this type envisage connection to given web sites, which comprise a series of HTML-type web pages which illustrate and describe the products on sale.

The buyer can browse through the pages to look for the one that he is interested in and then send an order, which is acquired by the server of the site to which the user is connected. Normally, at this point the server transfers the said order onto the Internet network, for instance, via e-mail, to the producer of or dealer in the chosen good, who in turn issues a message confirming the order received.

Following upon this confirmation, the server can transmit to the customer a further e-mail to confirm that the producer or dealer has received the order and that the goods indicated will be delivered to the address indicated in the order.

Of course, the transmission techniques may also comprise other means, such as fax, telephone, or voice-recognition interactive systems.

An on-line selling process of a traditional type, then, can be summarised in the following steps: the buyer uses the mouse to choose a product chosen from a catalogue which is represented on one or more web pages of an Internet site; the buyer drags the products selected, one by one, into the shopping cart; the buyer pays the amount due, using a credit card or some other similar form of payment.

However, all known methods for on-line selection and purchase of products present a series of considerable drawbacks, above all, the fact that the customer has to make a choice, having at his disposal only a static and two-dimensional image of the product he wants.

In addition, the technical and aesthetic details of the product are necessarily contained within a minimal description appearing on the screen accompanying the photograph or drawing shown on the web page.

Finally, advertising or sales promotion messages can only be provided in given areas of the screen (banners).

A purpose of the present invention is therefore to provide an interactive system for making on-line commercial transactions which is able to overcome the drawbacks mentioned above, i.e., to propose a system that is based upon an interactive mode of exploration and subsequent purchase, preceded by a dealing phase between the customer and the dealer or producer directly on line, during which the characteristics of the product, price, forms of payment, and the like may be discussed.

Another purpose of the present invention is to provide an interactive system for making commercial transactions that makes it possible to issue advertisements or promotional messages, as desired, directly within a virtual scenario.

A further purpose of the present invention is to indicate a method for making commercial transactions that enables development of an interactive system of virtual navigation, in particular within stores of a location.

Such purposes are achieved by an interactive method for making commercial transactions according to claim 1, to which the reader is referred for reasons of brevity.

Other additional technical characteristics of the method referred to above and of the corresponding system are specified in the subsequent claims.

Advantageously, the method according to the invention enables the customer to identify and request, in a simple, intuitive and safe way, within a virtual space of navigation on the Internet, a whole series of products and services; the customer can then examine the goods directly inside the store in question.

In practice, on the screens of the various terminals connected, the actual interiors of the shops, stores, commercial centres or hotels of one or more given cities are displayed, and the customer is afforded the possibility of gaining access to the inside of the desired store in order to look among the shelves, choose the products, check their characteristics, make bookings, ask the dealer for information and, finally, gaining direct access to the procedures for ordering the desired article or service.

It is moreover possible to make further purchases or bookings inside the same shop, commercial centre or hotel or in other stores present in the web site, without having to follow predetermined or limited itineraries or purchasing strategies.

This certainly results in a richer customer experience and higher customer satisfaction; the customer will be able to use the system for accessing information and purchasing goods and services in a simple, secure and rapid way, whilst having the same pleasure of buying in a real shop or store, given that wandering about looking at the street shop windows, the shelves, products and promotions is reproduced at a virtual level.

It should finally be noted that, according to the present invention there are no limits of any kind as regards the sorts of goods or the number of goods, products or services available to be purchased on line, since they may be products or services for both niche market and the wide distribution mass market.

Further purposes and advantages of the present invention will emerge more clearly evident from the ensuing description, which refers to a particular embodiment of the interactive system for making commercial transactions, and which is illustrated, purely to furnish an explanatory and non-limiting example, in the attached figures, in which:
- Figure 1 is a block diagram of a hardware station by means of which the customer can gain access to the interactive commercial transaction system according to the present invention;
- Figure 2 is a block diagram that reproduces the overall operation of the interactive method for making commercial transactions according to the present invention;
- Figure 3 is an example of display, on the screen of the buyer's terminal, of a web page of the site corresponding to the interactive system according to the present invention; and
- Figure 4 is an example of display, on the screen of the dealer's terminal, of a web page of the site corresponding to the interactive system according to the present invention.

It is to be noted that the present invention refers, in particular, to a system of on-line trading which enables organisation of direct sale of products or services to the buyer-customer via a system of network-connected electronic computers.

The computer system comprises at least one web server, which enables virtual navigation by the customer inside the city street shop, commercial centre, hotel or any other store, and accepts the orders from the customer for one or more products or services that the customer wants from that shop in question.

With reference to the above-mentioned figures, the number 28 designates a remote computer terminal of a buyer-customer, which comprises a central processing unit (CPU) 10, one or more interfaces 11 for network connection (for example, on the Internet 14), at least one mouse or pointer 12, a keyboard 13, a screen 15 for displaying the web pages where the user can navigate, a RAM memory 16 and a drive 17 for the hard disk of the computer terminal 28.

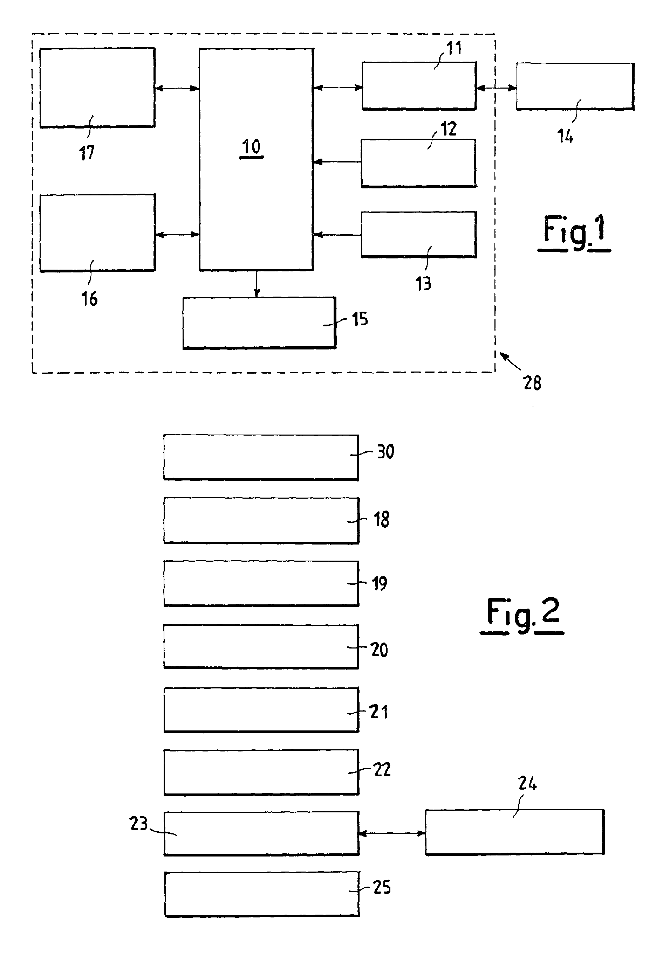

The on-line commercial transaction process according to the present invention comprises the steps represented in the block diagram of Figure 2 and, in particular, comprises the initial choice (step indicated by 30) of the city in the main squares and streets of which virtual navigation can start, the choice (indicated by 18) of the shop, commercial centre, hotel or the like, where the customer can make his purchases, the visit (indicated by 19) inside the store chosen, with the possibility of moving around from one environment to another and obtaining a 360° view of the environments, a step of choosing one or more products or services (step indicated by 20), a possible step of display and opening (step indicated by 21) of additional windows on the screen, which provide information in the form of text, additional pictures or other objects regarding the technical or commercial characteristics of the aforesaid products or services, a step of gathering said products or services in a virtual shopping cart and placing of them (step indicated by 22) on the dealer's counter, a step of possible activation of a chat line (step indicated by 23) by the buyer-customer with other customers who are visiting the site, in order to exchange opinions and impressions on the products or services and on their technical characteristics and benefits, and a step of possible activation of a further chat line (step indicated by 24) with the dealer offering the products or services, in order to obtain further technical information, bargain over the terms of the transaction and over the conditions of payment, discuss modalities of delivery of the goods, etc.

Finally, at the end of the transaction (step designated by 25) it is necessary to enable the buyer-customer to make his payment for the goods purchased in full security, for instance, not allowing other visitors to the site or other persons who may be interested (computer pirates) to gain access to the information transmitted by the customer regarding his bank account or the credit cards used for the payment.

Navigation through the streets of the chosen location and inside the various environments or premises of the stores takes place by displaying the movements in a three-dimensional space starting from a conventional movement in two dimensions of a pointer device 12, such as a mouse or a trackball.

Said three-dimensional method and system are already known and envisage that the three-dimensional space is projected in a two-dimensional plane in order to be displayed inside a web page or on the screen 15 of the terminal 28.

A reference position can then be defined. Such a position may correspond to the centre of the web page or of the screen 15. Therefore, navigation through a three-dimensional space which surrounds said reference position, can be performed.

The user can move a cursor or pointer on the screen, which is connected to the mouse or trackball 12 in order to impart a direction of movement in a two-dimensional plane.

Movement in the three-dimensional space is obtained starting from the movement imparted by the user, defining a sphere or cylinder having a centre corresponding to the centre of the two-dimensional plane and determining the points of intersection of a line perpendicular to the two-dimensional plane, said line intersecting the surface of the sphere in a point which corresponds to the position of the button or pointer.

The direction of the resulting movement is thus defined by a vector which extends from the origin to the given points of intersection.

Other techniques of projection of the three-dimensional space onto a two-dimensional screen are generally known and are described, for example, in the volume by J. Foley *et al.,* "Computer Graphics: Principles and Practice", 2nd ed., Addison-Wesley, 1990, as well as in the US Patent No. 5 841 440 (Apple Computer, Inc.) dated November 24, 1998.

For displaying the immersive and 360-degree panoramic scenes, various technologies can be used, such as QUICKTIME VR produced by Apple or IPIX.

In particular, in preferred embodiments, which are provided as explanatory but non-limiting examples of the invention, immersive and 360-degree panoramic scene displays are used according to the technologies mentioned above, which allow the user to explore a scenario actively by rotating the view from one side to another and zooming in and out, at the same time perceiving the sounds of the environment, the noises of the objects present in the scene, or even listening to a preferred radio station.

In addition, according to the technology described, the possibility is envisaged of inserting in the represented scene a series of hotspots (i.e., mouse-sensitive areas), which make it possible for the user to move onto other observation points so that he can have the experience of crossing a road, crossing a bridge, entering a historical building, or entering a shop or store.

During navigation from one place to another, a map indicates the current position. In addition, inside each panoramic picture, the user can interact via his terminal to explore other contents of the scene, such as digital movies, still pictures, text descriptions, and links with other sites of interest, such as sites of local newspapers or tourist offices.

Again thanks to the aid of the virtual navigation procedure described previously, it is possible to walk along streets or avenues or through parks in the area (the virtual image of which reproduces faithfully what has been filmed by the camera on the chosen spot, such as squares, monuments, cultural places, sites of artistic interest), identifying the stores of interest.

Once the desired shop has been chosen, the user can enter the premises and move around from one room to another or within the same room.

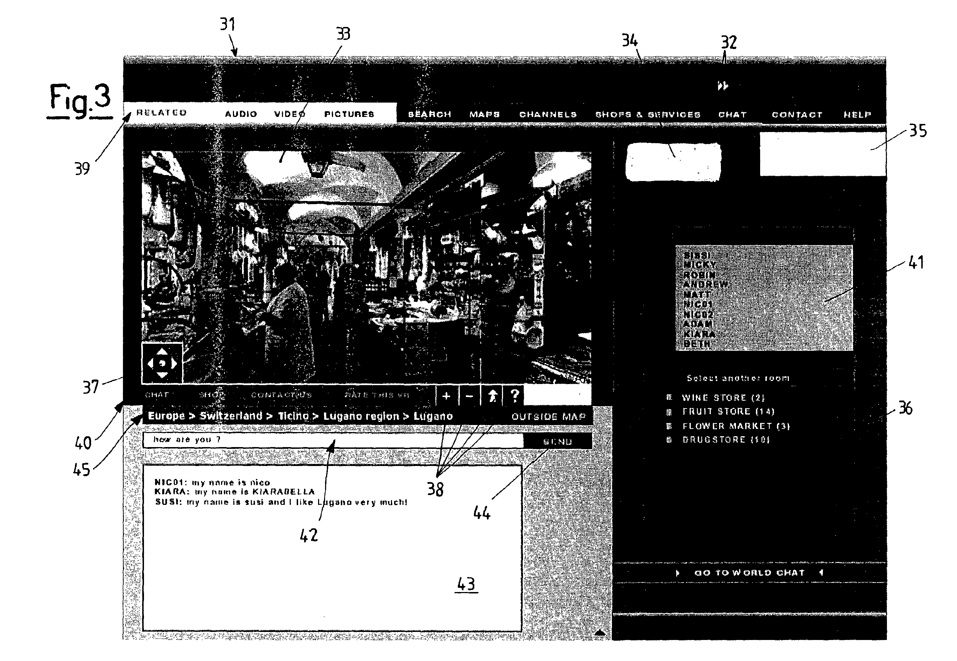

In particular, when a customer-buyer is inside a store, he has available on the monitor of his computer terminal a typical screen corresponding to what is represented in the attached Figure 3.

With particular reference to the above figure, various portions of the screen may be noted on which the buyer-customer can make his choices.

First of all, a banner area 31 is provided, where the mark of the company owning the web site is represented, together with possible advertisements. Within the area 31 a space 32 is likewise provided for enabling a link with web pages presenting forms designed for the registration of visitors to the site, in order to be able to check the names or nicknames of the persons wishing to activate an on-line chat line 23, 24.

The procedure for purchasing products or services according to the interactive system for making commercial transactions which forms the subject of the present invention is basically as described in what follows.

First of all, it is necessary to connect to an Internet web site via a provider. At this point, after a series of screens welcoming the user and explaining the content of the site, the user arrives at a menu according to which it is necessary to download a virtual navigation program of a standard type from the site onto his own computer terminal in the case where the latter is not already equipped with one.

The customer has the possibility of choosing a desired location, in Europe or in other parts of the world, following a cascade menu: choice of continent, choice of country, choice of region or district, and then choice of town. In addition, it is possible to choose to start one's own virtual navigation from a given point of the town, identified by the indication of streets, squares, famous parks or typical sights of the town.

Alternatively, navigation can follow particular channels (for instance, the golf channel, with specialised shops and information on golf courses) or by keyword via an appropriate search engine.

After the customer has made the above choice, the program displays a screenshot of the area indicated, within which it is possible to move around in all directions.

At this point, it is possible to follow a guided path or an individualised path by moving the mouse 12 by hand and having, on the screen, an indication of the name of the streets in the neighbourhood of the area just covered. Then, along the way, the customer can view, in particular, the stores of interest to him.

Once a shop has been chosen, he can use the mouse 12 to enter the establishment.

The screen of Figure 3 represents an environment of a store chosen by a customer (area 33 of the screen 15). In the areas 34, 35 of the same screen 15 there are represented, respectively, the address and the logo of the shop chosen, whilst the area 36 is provided for the customer to choose, using the pointer 12, a different part or room of the same shop. Furthermore, the customer can also move around in the premises using the button 37 and select the desired products or services using the push-buttons 38 for zooming in and zooming out.

Further command bars 39, 40 refer, in particular, to the possibilities of activating the sound, starting search procedures, displaying town maps or activating a chat line or an audio/videoconference with other visitors to the site or with the dealer offering the products or services. In this latter case, the names of the people who are connected via the network to the chat line and /or the audio/videoconference appear in the area 41, whilst in the areas 42, 43 are displayed, respectively, the current message (with the possibility of sending it via the push-button 44) and the last remarks exchanged between customers who came to visit the same shop.

Finally, the command bar 45 refers to the location selected, the map of which can be recalled on the screen 15 at any moment.

If the chat line is active, the customer can join in by pointing with the mouse 12 and selecting the button 40. A message will then come up on the screen 15 to indicate that the chat line is active, inside the area 43 of the screen 15.

In addition, the visitors to the site who have not yet been admitted to the chat line and wish to enter will have to choose a nickname to start communication. For this purpose, a check is carried out on the name to make sure that it has not yet already been used by others or chosen by other customers who are on line at the same time. If the name has not already been used, the user is offered three different alternatives plus the possibility of modifying it again.

In the case where activation of the chat line is made by customers already enrolled in it, initially it will be necessary to type in the name used and a password so as to access the areas for sending messages 42, 44, and for dialoguing 43.

On the other hand, also the dealer offering products or services in the chosen store is able to activate a chat line from his own terminal installed inside his own establishment.

This is extremely advantageous, in so far as, in this way, the customer-buyer can obtain information from the dealer concerning further physical or technical characteristics of the product or service purchased. Furthermore, by so doing, it is possible to exchange information, negotiate the price or form of payment, discuss the form and delivery of the products to the address indicated.

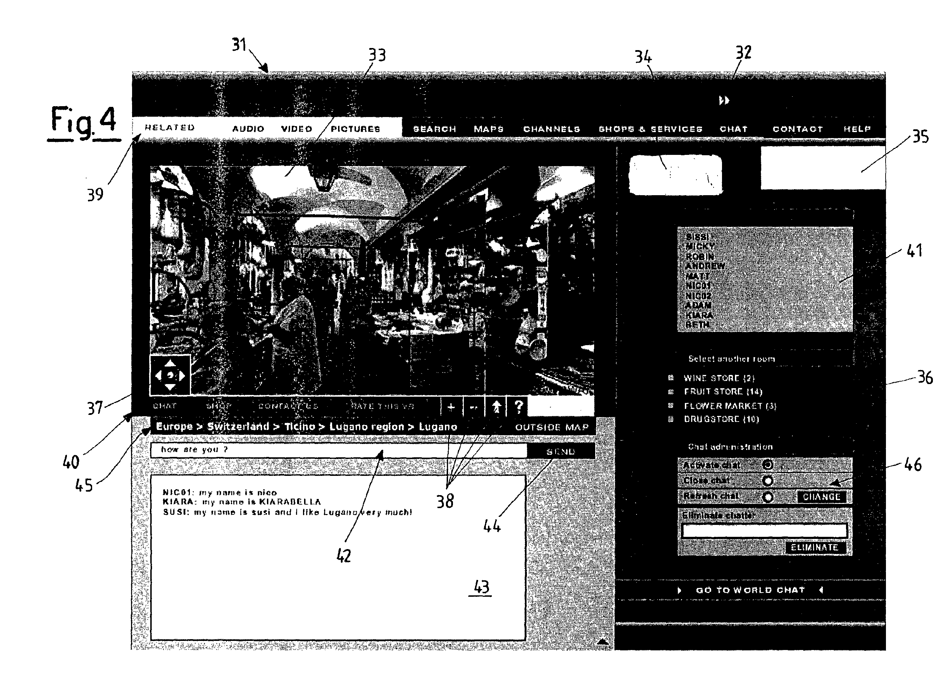

The seller will typically have three options of control over his own chat line. In this connection, Figure 4 shows a typical screenshot of the dealer's terminal, which appears simultaneously with the screenshot of the customer-buyer's terminal 28.

As may be noted, the only difference in the screens shown resides in the possibility for the dealer to use, in his interface, a set of keys which are provided in the area 46. These comprise a button for activating/deactivating the chat line, for example when the dealer is busy with other customers or in the case where undesired messages are sent, a button for expelling a user from the chat line in order to prevent possible pranks or instances of computer piracy, and a key for sending messages in order to allow customers to find out when the chat line will be opened again (time, chatting parties, etc.) and to find out about supplementary subjects that may possibly be proposed (thematic discussions, videoconference guests, on-line events, promotional messages, special offers and customer incentives, etc.).

A final important feature is that of enabling the commercial transaction proposed in the chat line to be developed and closed in complete security for all the parties. In this connection, it is necessary that, for instance, other customers participating in the chat line cannot gain access to private information, such as identification data on the purchaser, his credit-card number or his bank account, etc.

All this can be achieved by envisaging passwords for the customer to enter the chat line, confirmation messages, by the dealer, which include, for instance, coded information identifying a given buyer, network remote nodes, where the necessary checks can be carried out, and particular communication protocols, or other security procedures, which are in themselves known.

A typical example of navigation in the network, which uses an interactive method and system according to the present invention is essentially as described below.

For instance, a tourist who is organising a weekend in Venice can start exploring the home page of the site and then select the items Europe, Italy and Venice.

At this point, the user enters an interactive and 360-degree panoramic display of Piazza San Marco. The user can move around in the square and discover San Marco Cathedral, the Dogi Palace, the Laguna, with a background sound reproducing the sound of the crowd, and a boat.

If the mouse is moved onto the cathedral, there appears a hotspot, which, if selected, causes an automatic zoom in and the appearance of a new scene: the panoramic display of the interior of the cathedral.

In this way, it is possible to stop to look at the gilded mosaics, the altar and the marble floor.

Other stills enable detailed views of the mosaics, and texts regarding the history of the cathedral.

After this virtual experience of the San Marco cathedral, the tourist is even more excited about the opportunity to live the real experience.

But how to find a pleasant and not too expensive hotel in Venice? The site described in this invention offers the possibility of selecting the list of the hotels in Venice within a chosen price range.

The hotels corresponding to the request are displayed on a map and hence can be selected individually.

For example, our tourist may select a hotel near Piazza San Marco and make an interactive visit of the entire hotel. After a glance at the entrance, the dining room and a few other rooms, the tourist, if the arrangement appeals to him, can go back to the reception hall to activate a chat line with the receptionist to ask about prices and what rooms are available.

The rooms chosen may be viewed again interactively before the customer confirms his booking.

At this point, the customer can pay directly on line for the rooms booked, transferring on line and in complete security the information regarding his credit card.

## Claims

1. An interactive method for making on-line commercial transactions in a communication network among electronic computers, of the type comprising terminals (28) of customers or users of the network and at least one server for connecting dealers in products or services to stores by connection means for on-line purchasing of said products or services, **characterised in that** it comprises the following steps:
- storing information and data regarding said products and services;
- connection between said stores and at least one virtual representation of their environments and location; and
- reception of at least one request to said dealers on the part of at least one customer, said request comprising requests for information on said products or services and on the modalities of the transaction.

2. An interactive method according to claim 1, **characterised in that** it further envisages the creation of one or more web pages for 360-degree panoramic and immersive display of the internal environments and of the premises of said stores, as well as for information on said products and services, and the transmission of web-type menu pages to said customer terminals (28) from which said requests arrive.

3. An interactive method according to claim 1, **characterised in that** the screens (15) of said customer terminals (28) display the internal environments of said stores in one or more pre-set locations, in such a way as to enable said customers to access the inside of at least one desired store, in order to choose the products or services, examine them from various points of view, check their physical and technical characteristics, and then have access to procedures for managing the order for said products or services.

4. An interactive method according to claim 3, **characterised in that** it further comprises the steps of initial choice (30) of a location for virtual navigation, a choice (18) of at least one shop, store, commercial centre, hotel, or the like, in which to make purchases, a visit (19) inside a chosen store, with the possibility of moving around from one part to another of said establishment and having an immersive and 360-degree panoramic view of the environments, a choice (20) of at least one product or service, and gathering together (22) of said products or services inside a virtual shopping cart and carrying them into a given area of said store.

5. An interactive method according to claim 4, **characterised in that** it envisages a further step of activation (23. 24) of at least one chat line or audio/videoconference by the customer with other customers visiting the premises in order to exchange opinions and impressions on said products or services and on their technical and commercial characteristics, and with at least one dealer, receptionist or employee of the store in order to obtain further technical information, carry out negotiations on the terms of the transaction and on the conditions of payment, or discuss the method of delivery of said products or services.

6. An interactive method according to claim 5, **characterised in that** it further envisages a step of payment for said purchased products or services in a secure, unique and coded way.

7. An interactive system implementing a method according to claim 1, **characterised in that** said remote computer terminal (28) of a customer-buyer comprises at least one central processing unit (10), at least one interface (11) for connecting up to the network, at least one pointer device or mouse (12), a keyboard (13), a display screen (15) for displaying web pages, a RAM memory (16), and a drive (17) of the hard disk of said computer terminal (28).

8. An interactive system according to claims 7 and 4, **characterised in that** said navigation inside said chosen location and inside environments of said stores takes place according to a method of displaying movements in three-dimensional space, starting from a two-dimensional movement of said pointer device (12).

9. An interactive system according to claims 8 and 2, **characterised in that** said web page available to the customer is displayed via Internet and comprises a first area (31) designed to represent logos and advertising messages, a space (32) which enables a connection with other web pages, a second area (33) which represents at least one immersive and 360-degree panoramic interactive environment of said store chosen by the customer, other areas (34, 35) where the address and logo of the chosen store are represented, and a portion (36) for choosing a different part or environment of the same store.

10. An interactive system according to claim 9, **characterised in that** there are provided a buttons (37) for moving around inside said environment and a set of push-buttons (38) for choosing, enlarging, reducing, and changing the views, and for the dragging of said products or services.

11. An interactive system according to claim 9, **characterised in that** further areas (39, 40) of said web page refer to functions for activation of sound, starting of search procedures, displaying (45) of town plans and maps, activation of at least one chat line or audio/videoconference with other visitors to said site or with dealers, receptionists or employees of the store, displaying (41) of the nicknames of the people who send network messages, and displaying (42, 43) and sending (44) of current messages and of entire dialogues between the customers.

12. An interactive system according to claims 8 and 2, **characterised in that** a web page, which is available to at least one employee of the chosen store comprises means (46) for activating a chat line or an audio/videoconference from the computer terminal, which is installed inside said store, with various control options, such as activating and deactivating said chat line, definitively closing said chat line, and sending messages.
